# EUROPÄISCHE PATENTSCHRIFT

(11) **EP 2 409 824 B1**
(45) Veröffentlichungstag und Bekanntmachung des Hinweises auf die Patenterteilung: **28.06.2017**
(21) Anmeldenummer: 11174798.6
(22) Anmeldetag: 21.07.2011
(51) Int. Cl.: B29C 47/90, B29C 47/92

(54) **Vorrichtung und Verfahren zur energiesparenden Kalibrierung und Kühlung von Kunststoffprofilen**
Apparatus and method for energy efficient calibration and cooling of plastic profiles
Appareil et procédé pour économiser l'énergie de refroidissement et le calibrage des profilés en plastique

(30) Priorität: 22.07.2010 AT 12312010
(43) Veröffentlichungstag der Anmeldung: 25.01.2012
(73) Patentinhaber: SMI Service Management Immobilien GmbH, 4550 Kremsmünster (AT)
(72) Erfinder: Schwaiger, Meinhard, 4040 Linz (AT)
(74) Vertreter: Babeluk, Michael

(56) Entgegenhaltungen:
- EP-A1- 1 579 978
- EP-A2- 1 122 050
- DE-A1- 2 239 746
- DE-C1- 10 109 958
- DE-C1- 19 622 419

## Beschreibung

Die gegenständliche Erfindung bezieht auf ein Tanksystem zur energiesparenden Kalibrierung und Kühlung von Kunststoffprofilen, die endlos im Extrusionsverfahren hergestellt werden gemäß dem Oberbegriff von Patentanspruch 1.

Kalibrierwerkzeuge für Kunststoffprofile dienen zum definierten Abkühlen und Formgeben des in einer Extrusionsdüse geformten Profilstranges und umfassen mindestens ein Trockenkalibrierwerkzeug und mindestens einen Kalibriertank, der ebenfalls unter Vakuum gesetzt werden kann, und mehrere sogenannten Kalibrierblenden aufweist. Dabei erfolgt die definierte Wärmeabfuhr aus dem Profilstrang im Trockenkaliber mittels Wärmeübertragung von der Profiloberfläche an die mit Kühlwasser gekühlte Innenfläche des Trockenkaliberwerkzeuges und im Kalibriertank erfolgt die Wärmeabfuhr aus dem Profilstrang direkt in das den Profilstrang umströmende Kühlmedium (üblicherweise Kühlwasser). Im Trockenkaliberwerkzeug wird der noch weiche Profilstrang mittels Vakuum an die Innenfläche des Trockenkaliberwerkzeuges angesaugt, wobei die Innenfläche mit der Negativkontur der Profilgeometrie ausgeführt ist, unter Berücksichtigung eines möglichst vollständigen Kontaktes der Profilkontur mit der Negativkontur, damit ein möglichst optimaler und gleichmäßiger Wärmeübergang von der Profiloberfläche an die Trockenkaliberinnenfläche erfolgen kann. Im Kalibriertank wird der Profilstrang in Stützblenden geführt und das Kühlmedium durchströmt in Längsrichtung den Kalibriertank, entzieht dabei dem Profilstrang die restliche, der im vorgelagerten Extruder eingebrachten Wärmeenergie, und mittels eines definierten Vakuums im Kalibriertank wird den Formänderungen infolge Schrumpfvorgängen durch Abkühlung im Profil entgegengewirkt.

Dem Stand der Technik entsprechen Kalibriersysteme, bestehend aus einem oder mehreren Trockenkalibern gefolgt von einem oder mehreren Kalibriertanks. Diese Kalibriertanks bestehen aus einem vakuumdichten Tank, mehreren der Profilform angepasste Stützblenden und an den beiden Stirnseiten das Profil umschließende Abschlussblenden. Kühlmedium wird an einer oder mehreren Stellen im Kalibriertank zugeführt und vorzugsweise an einer (oder mehreren) in Längsrichtung versetzt angeordneten Stelle(n) mittels Unterdruck abgesaugt. Dabei wird das Kühlmedium durch gezielte Strömungsführung in mehr oder weniger stark ausgebildete Turbulenzen versetzt, zwecks Erhöhung der Kühlwirkung. Mittels einer separat vorgesehen Verbindung zu einem Vakuumsystem und spezieller regelbarer Luftventile wird ein definierter Unterdruck im Kalibriertank erzeugt, damit der über die Wasserströmung erzeugte Unterdruck für den erforderlichen Kühl- und Kalibrierprozess exakt nachjustiert werden kann. Nachteilig bei diesen Systemen ist der hohe Energiebedarf für die Förderung des Kühlmediums innerhalb des Kalibriertanks von einem Abschnitt zum nächsten mittels des Unterdruckes und der hohe Energieverlust infolge regelbarer Luftzufuhrventile.

Aus der EP 0 659 336 ist ein Kalibriertank bekannt, der aus einem Tank und mehreren Tankblenden besteht, die den Querschnitt des Tanks ausfüllen und den Tank der Länge nach in mehrere Kammern unterteilen, wobei die Tankblenden gegenüber dem Tank abgedichtet sind. Diese Tankblenden weisen eine erste Öffnung für die Profildurchführung und mindestens eine zweite Öffnung für das Durchströmen des Kühlwassers auf. Über eine Zuströmöffnung wird das Kühlwasser in den Tank in eine erste Kammer geleitet und über eine Abströmöffnung in der letzten Kammer wird das Kühlwasser abgefördert. Der Unterdruck im Kalibriertank wird mittels eines Regelventils (Kugelhahn) durch Luftzufuhr eingestellt. Das Kühlwasser wird mittels Unterdruck von einer Kammer zur nächstfolgenden Kammer durch die jeweils "zweite" Öffnung in den Tankblenden gefördert und gleichzeitig dabei eine turbulente Strömung erzeugt. Nachteilig dabei wirken sich der hohe Energiebedarf im Vakuumsystem infolge Frischluftzufuhr zur Unterdruckregulierung im Kalibriertank, die unruhige Kühlmedienströmung von einer Kammer zur nächstfolgenden Kammer und der verhältnismäßig hohe Kühlmedienfluss bei gleichzeitig geringem Kühleffekt (Temperaturdifferenz des Kühlwassers zwischen Zulauftemperatur und Abströmtemperatur) aus. Bedingt durch die mittels Differenzdruck in den benachbarten Kammern erzwungene Strömung ist der auf den Profilstrang einwirkende Unterdruck in jedem Abschnitt des Kalibriertanks unterschiedlich und strömungsabhängig, was zu einer zusätzlichen Erschwernis zur Prozesssicherheit führt.

Aus der AT 409.738 ist ein ähnliches Kalibriertanksystem bekannt, bei welchem die einzelnen Tankblenden den Querschnitt des Tanks im Wesentlichen ausfüllen und im Kalibriertank ebenfalls abschnittsweise Kammern bilden, in denen mittels Strömungsleiteinrichtungen im Tank das Profil schraubenförmig von Kühlwasser umströmt wird. Auch bei diesem System wird der Unterdruck im Kalibriertank mittels eines Regelventils und Luftzufuhr geregelt, sodass erhöhte Energieverluste im Vakuumsystem entstehen. Ein weiterer Nachteil ist der ebenfalls sehr hohe Wasserdurchsatz und der damit verbundene vergleichsweise geringe Kühleffekt des Kühlwassers (Temperaturdifferenz des Kühlwassers zwischen Zulauftemperatur und Abströmtemperatur). Die enorme Kühlwasserströmung benötigt zusätzlich einen vergleichsweise hohen Energieanteil zur Erzeugung der Strömung und Überwindung der Strömungswiderstände infolge schraubenförmiger Strömungsformen; die Strömung selbst wird durch differenzierte Druckunterschiede in benachbarten Kammern mittels Vakuum erzeugt. Auch hier ist der auf den Profilstrang einwirkende Unterdruck in jedem Abschnitt des Kalibriertanks unterschiedlich.

Aus der AT 408.861 ist eine Kalibriervorrichtung bekannt, die aus einem unter Vakuum stehenden Tank und mehreren Kalibrierblenden besteht, die den Tank der Breite nach ausfüllen und eine Höhe aufweisen, die ein freies Überströmen von Kühlwasser von einem Abschnitt zum nächstfolgenden erlaubt. In jeden einzelnen von aufeinanderfolgenden Tankblenden gebildeten Abschnitt des Kalibriertanks wird von unten über eine Zuströmöffnung Kühlwasser eingebracht und derart jeder einzelne Abschnitt separat geflutet und das durchgeführte Profil vorzugsweise von unten nach oben umspült. Das Kühlwasser erreicht dabei einen Pegelstand knapp über der Höhe der Tankblenden und das Kühlwasser strömt in der letzten Kammer aus der vorletzten Kammer über die vorletzte Kalibrierblende in die Abzugskammer zu einer Abströmöffnung und wird mittels dieser mit Unterdruck abgesaugt. Im Kalibriertank wird ein einheitlicher Unterdruck mittels einer separaten Luftsaugleitung erzeugt. Nachteilig wirkt sich hier der hohe Kühlwasserverbrauch aus, weil jede Kammer separat mit Kühlwasser versorgt wird.

Aus der AT 007.670 ist ein Kalibriertank bekannt, der aus abschnittsweise in geschlitzten Rohrleitungen innerhalb des Tanks angeordneten Tankblenden besteht, wobei im geschlossenen Zustand des Tanks aus den Spalten zwischen Tankblende und Schlitz im Rohr Kühlwasser quer zur Längsrichtung des Profilstrangs gefördert wird. Über eine einzige Absaugöffnung wird Kühlwasser und Luft abgesaugt und der zur Kalibrierung erforderliche Unterdruck erzeugt. Nachteilig wirken sich der hohe Wasserverbrauch und das undefinierbare Vakuumniveau im Tank aus, weil eine dafür erforderliche Regeleinrichtung fehlt und Kühlwasser und Luft über eine einzige Absaugöffnung abgesaugt werden, was zu enormen Druckschwankungen führt.

Aus der AT 413.966 ist eine Kalibriervorrichtung bekannt, die aus einem äußeren luftdichten ersten Tank und einem darin angeordneten zweiten Tank besteht, dessen Höhe und Breite ein Überströmen von Kühlwasser aus dem zweiten Tank in den ersten Tank erlauben. Tankblenden sind im zweiten Tank abschnittsweise angeordnet und mit einer der Profilkontur entsprechenden Öffnung versehen. Kühlflüssigkeit wird seitlich von unten in jeden einzelnen Abschnitt des zweiten Tanks zugefördert, sodass die Kühlflüssigkeit von unten nach oben den Profilstrang umströmt und seitlich den zweiten Tank überströmt und in den ersten Tank strömt. Aus dem ersten Tank wird die überströmende Kühlflüssigkeit abgesaugt und über eine separate Absaugöffnung wird Luft abgesaugt und das Vakuumniveau geregelt. Nachteilig wirken sich der hohe apparative Aufwand und der hohe Wasserverbrauch, weil jede Kammer einzeln mit Kühlflüssigkeit beaufschlagt wird, aus. Die Druckschriften DE 196 22 419 C1 und EP 1 579 978 A1 offenbaren weitere Kalibriervorrichtungen. Ziel der gegenständlichen Erfindung ist es, eine Kalibriervorrichtung zu beschreiben, mit der die bekannten Nachteile beseitigt werden können.

Erfindungsgemäß wird die Aufgabe, eine hohe Kühlwirkung und einen innerhalb des Kalibriertanks gleichmäßigen, einfach einstellbaren Unterdruck zu erzeugen bei gleichzeitig sparsamstem Energieeinsatz durch ein System gemäß Patentanspruch 1 gelöst.

Der Ausdruck stromabwärtig bedeutet im gegebenen Zusammenhang auf der Seite der Abströmöffnung für das Kühlmedium. Die Abströmöffnung ist unterhalb der Überströmkante angeordnet, wodurch im Wesentlichen der Flüssigkeitsspiegel in der Abzugskammer festgelegt wird. Dieses Merkmal bezieht sich selbstverständlich auf die Gebrauchslage des Kalibriertanks, in der die Längsachse des Kalibriertanks waagrecht ist.

Die Funktion der erfindungsgemäßen Vorrichtung ist deutlich unterschiedlich zu der eines klassischen Wirbelbades, bei dem die Tankblenden abgesehen von der Öffnung für den Durchtritt des Profilstranges den Querschnitt des Kalibriertanks fast vollständig abschließen. Lediglich durch Öffnungen mit relativ geringem Querschnitt wird das Kühlmedium forciert durchgesaugt, wodurch entsprechende Verwirbelungen entstehen. Solche Wirbelbäder besitzen eine hohe Effizienz der Kühlung, leiden aber unter dem Nachteil, dass es sehr leicht zu pulsierenden Druckschwankungen im Inneren des Kalibriertanks kommen kann, wobei auch periodische Schwankungen des Kühlmittelspiegels zu beobachten sind. Diese Druckschwankungen und Niveauschwankungen können die Qualität des hergestellten Profilstranges beeinträchtigen.

Die vorliegende Erfindung beruht auf einem unterschiedlichen Konzept, nämlich dem einer relativ ruhigen Kühlmittelströmung, wobei die Kühlwirkung über einen entsprechenden Volumenstrom sichergestellt wird. Der ruhige Kühlmittelstrom wird durch Tankblenden erreicht, die große Durchströmquerschnitte für das Kühlmedium bereitstellen, indem sie sowohl zu den Seitenwänden als auch zum Boden des Kalibriertanks großflächige Öffnungen bilden. Auch an der Oberseite der Tankblenden sind großzügige Überströmquerschnitte für die Luft vorgesehen. Ein konstantes und einheitliches Niveau des Kühlmediums wird durch die Überströmblende mit ihrer Überströmkante erreicht, die in der Art eines Wehrs den Flüssigkeitsspiegel festlegt. Wesentlich ist, dass an der stromabwärtigen Seite der Überströmblende, also in der Abzugskammer ein niedrigerer Flüssigkeitsspiegel eingestellt ist, der durch die Abströmöffnung für das Kühlmedium definiert ist. In einfacher Weise wird dieser niedrigere Spiegel in der Abzugskammer dadurch eingestellt, dass Kühlmedium über eine Pumpe mit relativ hoher Förderleistung über die Abströmöffnung abgesaugt wird. Wenn nun der Flüssigkeitsspiegel in der Abzugskammer das Niveau der Abströmöffnung erreicht, aspiriert die Pumpe Luft, wodurch eine Verringerung der Leistung stattfindet. Sobald auf diese Weise weniger Kühlmedium angesaugt wird, kann der Flüssigkeitsspiegel in der Abzugskammer wieder geringfügig ansteigen, so dass sich automatisch ein Gleichgewichtszustand einstellt. Es hat sich herausgestellt, dass diese Gleichgewichtslage relativ stabil ist und vor allem durch diesen Rückkoppelungsvorgang keine Druckschwankungen im Kalibriertank erzeugt werden. Auf diese Weise kann eine hohe Qualität der hergestellten Profile sichergestellt werden.

In einer ersten bevorzugten Ausführungsvariante der Erfindung ist vorgesehen, dass im Kalibriertank ein einheitliches Vakuum über eine Absaugöffnung erzeugt wird, die vorzugsweise im Bereich der Abzugskammer oberhalb der Überströmkante vorgesehen ist. Auf diese Weise ist es möglich, das Vakuumniveau unabhängig vom Mengenstrom des Kühlmittels einzustellen, so dass eine besonders einfache Bedienung der Vorrichtung gegeben ist. Alternativ ist es allerdings auch möglich, dass die Luft gemeinsam mit dem Kühlmedium über die Abströmöffnung abgezogen wird, wobei gegebenenfalls das Vakuum durch gezielte Falschluftzufuhr in an sich bekannter Weise eingestellt werden kann.

Ein wichtiger Aspekt ist, dass die zur Kalibrierung erforderlichen Tankblenden eine gegenüber dem Kalibriertank bestimmte Geometrie aufweisen, die ein freies Strömen des Kühlmediums entlang des Profilstranges erlauben, ohne dass zur Förderung des Kühlmediums eine Druckdifferenz erforderlich wäre. Dazu sind die Tankblenden der Höhe bzw. der Breite nach gegenüber den Innenabmessungen des Kalibriertanks derart gestaltet, dass ein ungehinderter Druckausgleich über der gesamten Länge des Kalibriertanks ermöglicht wird und das Kühlmedium innerhalb des Kalibriertanks seitlich bzw. oberhalb / unterhalb der Tankblende frei vorbeiströmen kann. Der Kalibriertank weist zumindest eine Zuführöffnung für das Kühlmedium und zumindest eine in Längsrichtung versetzt angeordnete Abströmöffnung für das Kühlmedium auf. Diese Abströmöffnung befindet sich an einem Ende des Kalibriertanks in einem Abschnitt, der von einer Überströmblende begrenzt ist. Diese Überströmblende füllt die gesamte Innenbreite des Kalibriertanks aus und weist eine Höhe auf, die zumindest über die oberste Begrenzung des zu kalibrierenden Profilstranges reicht. In dem von dieser Überströmblende begrenzten Abschnitt des Kalibriertanks befinden sich die zumindest eine Zuströmöffnung für das Kühlmedium und die einzelnen Tankblenden. Innerhalb dieses Abschnittes wird mittels der Überströmblende das Kühlmedium aufgestaut und das zuströmende Kühlmedium fließt von der Zuströmöffnung frei entlang des Profilstranges über die Oberkante der Überströmblende zur Abströmöffnung, von der das Kühlmedium, vorzugsweise mittels Unterdruck, abgefördert wird. Getrennt von dieser Abströmöffnung wird über eine zweite separate Öffnung Luft abgesaugt und derart ein einheitlicher Unterdruck im Kalibriertank erzeugt. Auf diese Weise wird ein Kalibriertanksystem gebildet, bei welchem der Kühlmedienfluss gering gehalten werden kann, weil zur Funktionserfüllung keine Zwangsströmung erforderlich ist, und bei welchem ein einheitlicher Unterdruck im gesamten Kalibriertank vorliegt, weil zur Förderung des Kühlmediums keine Druckdifferenzen erforderlich sind, da ja keine durch den Tankquerschnitt ausfüllende Tankblenden abschnittsweise abgegrenzte Kammern vorhanden sind. Die vergleichsweise geringe Kühlmedienströmung bewirkt eine Erhöhung der Temperaturdifferenz zwischen Kühlmedienzufuhr und Kühlmedienabströmung, wodurch eine zusätzliche Effizienzsteigerung erreicht wird.

Weiters betrifft die vorliegende Erfindung ein Verfahren, bei dem die obige Vorrichtung verwendet wird.

Die Erfindung wird anhand der Figuren 1 bis 4 näher erläutert. Es zeigen:
- Fig. 1: eine schematische Darstellung des erfindungsgemäßen Kalibriertanks in einer axonometrischen Ansicht,
- Fig. 2: einen Querschnitt des Kalibriertanks von Fig. 1,
- Fig. 3: einen Schnitt nach Linie A-A in Fig. 2 und
- Fig. 4: einen Schnitt nach Linie B-B in Fig. 2.

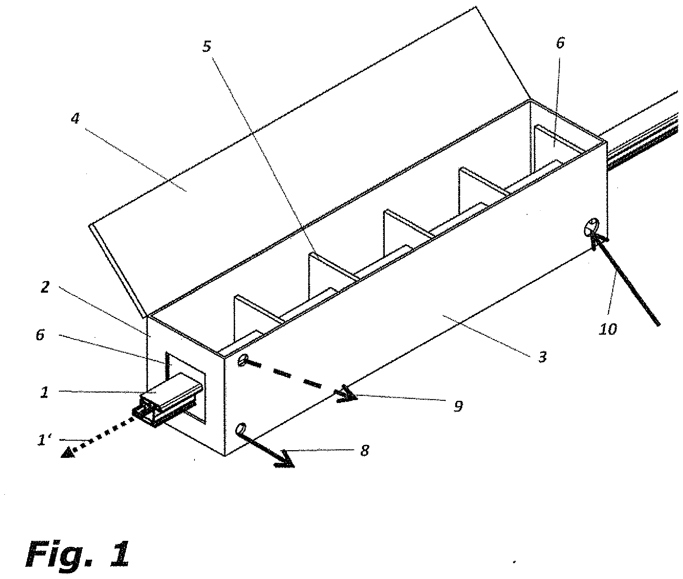

Fig. 1 zeigt einen erfindungsgemäßen Kalibriertank in isometrischer Darstellung in geöffnetem Zustand. Der endlos im Extrusionsverfahren erzeugte Profilstrang 1 wird in Extrusionsrichtung 1' durch den Kalibriertank, bestehend aus den Stirnseiten 2, den Seitenteilen 3, dem Deckel 4, gefördert, wobei der Profilstrang 1 durch die der Profilkontur angepasste Öffnung in den Tankblenden 5 gestützt wird. An den beiden Stirnseiten 2 befinden sich Endblenden 6, die den Kalibriertank nach außen hin abdichten. Im geschlossenen Zustand wird Kühlmedium über die Zuführöffnung 10 in den Kalibriertank gefördert und über die Abströmöffnung 8 abgeleitet; im Inneren des Kalibriertanks wird über die Absaugöffnung 9 für Luft ein Unterdruck erzeugt.

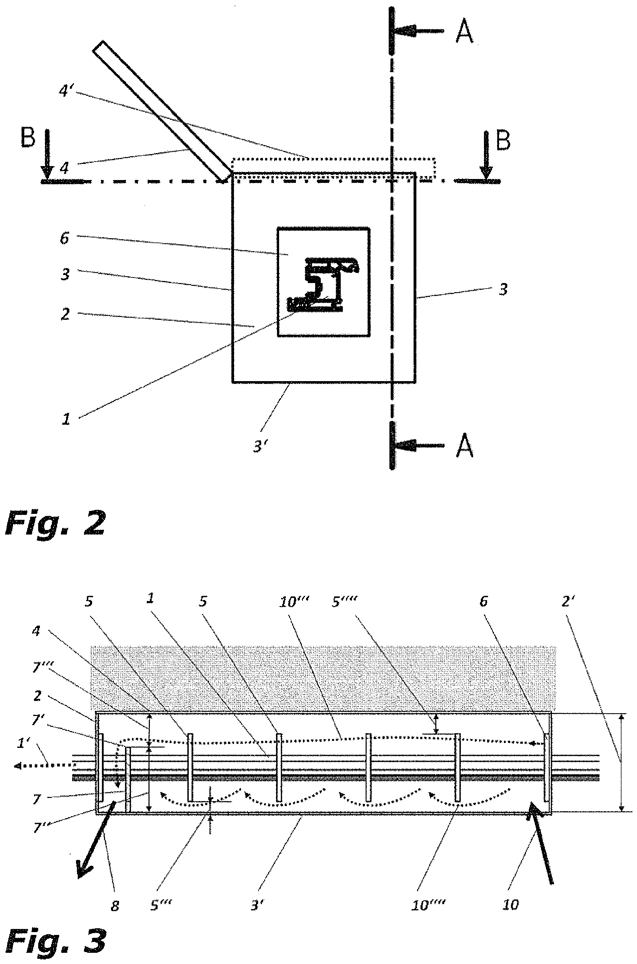

Fig. 2 zeigt den Kalibriertank von der Stirnseite, wobei hier der Tankboden 3' zu sehen ist. Der Tankdeckel4) ist im Produktionszustand geschlossen 4' Halerungen für die Tankblenden 5 sind zur Vereinfachung nicht dargestellt.

Fig. 3 zeigt einen Längsschnitt (Seitenansicht) des Kalibriertanks entlang der Schnittlinie A-A gemäß Fig. 2. Darin sind die Überströmblende 7, die Überströmkante 7', die Tankblenden 5, der Abstand 5'" der Tankblenden 5 zum Tankboden 3 und der Abstand 5"" der Tankblenden 5 zum Tankdeckel 4, die Kühlmedienzufuhr 10, die Kühlmedienströmung 10"" unterhalb der Tankblenden und die Kühlmedienströmung 10"' oberhalb des Profilstranges 1 sowie der Überlauf der Kühlmedienströmung 10"' über die Überströmkante 7' zur Abströmöffnung 8 dargestellt. Die Höhe der Kühlmedienströmung wird durch die Höhe 7" der Überströmblende 7 bestimmt, die einen Abstand 7'" zum Tankdeckel 4 aufweist, um einen einheitlichen Unterdruck innerhalb des Kalibriertanks zu gewährleisten.

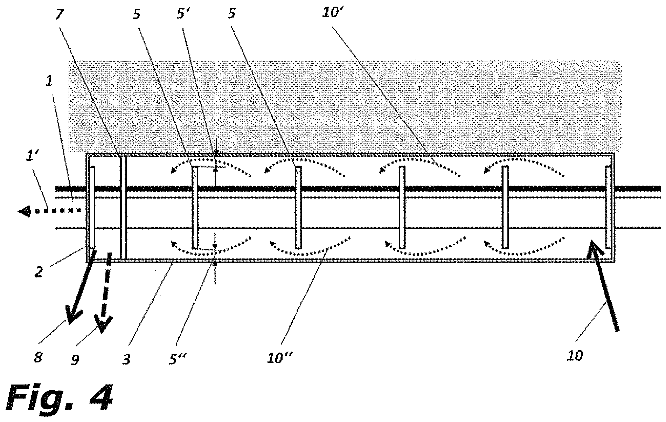

Fig. 4 zeigt einen Längsschnitt (Draufsicht) des Kalibriertanks entlang der Schnittlinie B-B gemäß Fig. 2. Die Tankblenden 5 weisen einen Abstand 5', 5" zu den Seitenwänden 3 des Kalibriertanks auf, und das Kühlmedium kann dabei entlang der Strömungsfiguren 10', 10" die Tankblenden 5 umströmen. Die Überströmblende 7 füllt die gesamte Breite des Kalibriertanks aus und grenzt die Kühlmedienströmung gegenüber der Abströmöffnung 8 ab. Sämtliche Tankblenden 5 sind in nicht näher dargestellten Haltevorrichtungen im Kalibriertank fixiert.

## Patentansprüche

1. Vorrichtung zur energiesparenden Kalibrierung und Kühlung von extrudierten Profilsträngen (1) mit einem evakuierbaren Kalibriertank, in dem mehrere Tankblenden (5) angeordnet sind, durch die der zu kalibrierende Profilstrang (1) geführt wird, und die derart ausgeführt und angeordnet sind, dass eine freie Strömung des Kühlmediums entlang dem Profilstrang (1) von der Zuströmöffnung (10) bis zur Abströmöffnung (8) entsteht, wobei an der stromabwärtigen Seite des Kalibriertanks eine Überströmblende (7) vorgesehen ist, die unten und seitlich dicht am Kalibriertank anliegt und an ihrer Oberseite eine Überströmkante (7') aufweist, wobei die Überströmblende (7) einen Hauptabschnitt des Kalibriertanks an ihrer stromaufwärtigen Seite von einer Abzugskammer an ihrer stromabwärtigen Seite trennt, und wobei im Bereich der Abzugskammer eine Abströmöffnung (8) für das Kühlmedium unterhalb der Überströmkante (7') vorgesehen ist, **dadurch gekennzeichnet, dass** die
Tankblenden (5) beideseitig einen Abstand (5', 5") von Seitenwänden des Kalibriertanks und einen Abstand (5"') von einem Boden des Kalibriertanks aufweisen, so dass die Kühlmedienströmung (10', 10") die Tankblenden (5) seitlich und unten umströmt.

2. Vorrichtung nach Anspruch 1, **dadurch gekennzeichnet, dass** im Kalibriertank ein einheitliches Vakuum über eine Absaugöffnung (9) erzeugt wird, die vorzugsweise im Bereich der Abzugskammer oberhalb der Überströmkante (7') vorgesehen ist.

3. Vorrichtung nach einem der Ansprüche 1 oder 2, **dadurch gekennzeichnet, dass** das Kühlmedium über die Abströmöffnung (8) und die Luft über die Luftabsaugöffnung (9) getrennt abgesaugt werden.

4. Vorrichtung nach einem der Ansprüche 1 oder 2, **dadurch gekennzeichnet, dass** das Kühlmedium und die Luft gemeinsam abgesaugt werden.

5. Verfahren zur energiesparenden Kalibrierung und Kühlung von extrudierten Profilsträngen (1), die durch den evakuierbaren Kalibriertank einer Vorrichtung nach dem Anspruch 1 geführt werden, in dem mehrere Tankblenden (5) angeordnet sind, durch die der zu kalibrierende Profilstrang (1) geführt wird, und wobei eine freie Strömung des Kühlmediums entlang dem Profilstrang (1) von der Zuströmöffnung (10) bis zur Abströmöffnung (8) herbeigeführt wird, wobei das Kühlmedium über eine Überströmkante (7') einer Überströmblende (7) von einem Hauptabschnitt des Kalibriertanks in eine Abzugskammer geführt wird und dort aus dem Kalibriertank angezogen wird, **dadurch gekennzeichnet, dass** das Kühlmedium die Tankblenden unten und seitlich umströmt.

6. Verfahren nach Anspruch 5, **dadurch gekennzeichnet, dass** das Kühlmedium über die Abströmöffnung (8) und die Luft über die Luftabsaugöffnung (9) getrennt abgesaugt werden.

7. Verfahren nach Anspruch 5, **dadurch gekennzeichnet, dass** das Kühlmedium und die Luft gemeinsam abgesaugt werden.

## Claims

1. An apparatus for the energy-saving calibration and cooling of extruded profiled sections (1) with a calibration tank which can be evacuated and in which several tank baffles (5) are arranged, through which the profiled section (1) to be calibrated is guided, and which are designed and arranged in such a way that a free flow of the cooling medium is provided along the profiled section (1) from the inflow opening (10) up to the outflow opening (8), wherein an overflow baffle (7) is provided on the downstream side of the calibration tank, which baffle abuts the calibration tank at the bottom and on the side in a sealed manner and comprises an overflow edge (7') at its upper side, wherein the overflow baffle (7) separates the main section of the calibration tank on its upstream side from a draw-off chamber on the downstream side, and wherein an outflow opening (8) is provided in the region of the draw-off chamber for the cooling medium below the overflow edge (7'), **characterised in that** the tank baffles (5) have a distance (5', 5") on both sides from the side walls of the calibration tank and a distance (5"') from a base of the calibration tank, so that the cooling medium flow (10', 10") flows around the tank baffles (5) at the side and bottom.

2. An apparatus according to claim 1, **characterised in that** a uniform vacuum is generated in the calibration tank via a suction opening (9), which is preferably provided in the region of the draw-off chamber above the overflow edge (7').

3. An apparatus according to one of the claims 1 or 2, **characterised in that** the cooling medium can be sucked off separately via the outflow opening (8) and the air via the air suction opening (9).

4. An apparatus according to one of the claims 1 or 2, **characterised in that** the cooling medium and the air are sucked off together.

5. A method the energy-saving calibration and cooling of extruded profiled sections (1), which are guided through the calibration tank which can be evacuated, of an apparatus according to claim 1, in which several tank baffles (5) are arranged, through which the profiled section (1) to be calibrated is guided, and wherein a free flow of the cooling medium is provided along the profiled section (1) from the inflow opening (10) up to the outflow opening (8), wherein the cooling medium is guided via an overflow edge (7') of an overflow baffle (7) from a main section of the calibration tank to a draw-off chamber, and is drawn there from the calibration tank, **characterised in that** cooling medium flows around the tank baffles at the bottom and the side.

6. A method according to claim 5, **characterised in that** cooling medium is sucked off separately via the outflow opening (8) and the air via the air suction opening (9).

7. A method according to claim 5, **characterised in that** the cooling medium and the air are sucked off together.

## Revendications

1. Dispositif permettant le calibrage et le refroidissement de profilés (1) de façon à permettre d'économiser l'énergie comprenant une cuve de calibrage pouvant être mise sous vide dans laquelle sont montés plusieurs cloisons (5) au travers desquelles passe le profilé (1) à calibrer et qui sont réalisées et montées de façon qu'il se crée une circulation libre de l'agent de refroidissement le long du profilé (1) entre l'ouverture d'entrée (10) et l'ouverture d'évacuation (8),
dispositif dans lequel il est prévu, du côté aval de la cuve de calibrage une cloison de trop plein (7) qui s'applique hermétiquement à sa partie intérieure et latéralement sur la cuve de calibrage et comporte un bord de trop plein (7') sur son côté supérieur, la paroi de trop plein (7) séparant un segment principal de la cuve de calibrage situé de son côté amont dans le sens de circulation d'une chambre d'échappement située de son côté aval dans le sens de circulation, et, dans la zone de la chambre d'échappement étant prévue une ouverture d'évacuation (8) de l'agent de refroidissement située au-dessous du bord de trop plein (7'), **caractérisé en ce que**
les cloisons (5) de la cuve sont situées, de part et d'autre, à une distance (5', 5") des parois latérales de la cuve de calibrage et à une distance (5"') du fond de la cuve de calibrage de sorte que la circulation de l'agent de refroidissement (10', 10") traverse les cloisons (5) de la cuve latéralement et par le bas.

2. Dispositif conforme à la revendication 1,
**caractérisé en ce que**
dans la cuve de calibrage est produit un vide uniforme par l'intermédiaire d'une ouverture d'aspiration (9) qui est de préférence située dans la zone de la chambre d'échappement au-dessus du bord de trop plein (7').

3. Dispositif conforme à l'une des revendications 1 ou 2,
**caractérisé en ce que**
l'agent de refroidissement et l'air sont aspirés séparément respectivement par l'ouverture d'évacuation (8) et par l'ouverture d'aspiration d'air (9).

4. Dispositif conforme à l'une des revendications 1 et 2,
**caractérisé en ce que**
l'agent de refroidissement de l'air sont aspirés conjointement.

5. Procédé permettant de calibrer et de refroidir des profilés extrudés (1) de façon à économiser l'énergie mis en oeuvre au moyen de la cuve de calibrage pouvant être mise sous vide d'un dispositif conforme à la revendication 1, dans laquelle sont montées plusieurs cloisons (5) au travers desquelles passe le profilé (1) à calibrer, une circulation libre de l'agent de refroidissement se produisant le long du profilé (1) de l'ouverture d'entrée (10) à l'ouverture d'évacuation (8), l'agent de refroidissement étant guidé sur un bord de trop plein (7') d'une cloison de trop plein (7) d'un segment principal de la cuve de calibrage dans une chambre d'échappement, et y étant soutiré de la cuve de calibrage,
**caractérisé en ce que**
l'agent de refroidissement traverse les cloisons de la cuve par le bas et latéralement.

6. Dispositif conforme à la revendication 5,
**caractérisé en ce que**
l'agent de refroidissement et l'air sont aspirés séparément, respectivement par l'ouverture d'évacuation (8) et l'ouverture d'aspiration d'air (9).

7. Dispositif conforme à la revendication 5,
**caractérisé en ce que**
l'agent de refroidissement et l'air sont aspirés conjointement.
